# EUROPÄISCHE PATENTSCHRIFT

(11) **EP 1 028 033 B1**
(45) Veröffentlichungstag und Bekanntmachung des Hinweises auf die Patenterteilung: **25.06.2003**
(21) Anmeldenummer: 00101621.1
(22) Anmeldetag: 28.01.2000
(51) Int. Cl.: B60R 21/045, B60R 21/20

(54) **Unter einer Kraftfahrzeug- Schalttafel befindliche Energie- absorbierende Ablage mit einem Boden**
Energy-absorbing bottomed storage compartment under a vehicle dashboard
Compartiment de rangement avec fond absorbeur d'énergie placé sous un tableau de bord de véhicule

(30) Priorität: 12.02.1999 DE 19905966
(43) Veröffentlichungstag der Anmeldung: 16.08.2000
(73) Patentinhaber: Volkswagen Aktiengesellschaft, 38436 Wolfsburg (DE)
(72) Erfinder: Fechner, Holger, 38440 Wolfsburg (DE)

(56) Entgegenhaltungen:
- DE-A- 4 003 952
- DE-A- 4 243 791
- US-A- 5 190 314
- PATENT ABSTRACTS OF JAPAN vol. 1996, no. 07, 31. Juli 1996 (1996-07-31) & JP 08 080797 A (TAKATA KK), 26. März 1996 (1996-03-26)
- PATENT ABSTRACTS OF JAPAN vol. 018, no. 335 (M-1627), 24. Juni 1994 (1994-06-24) & JP 06 080058 A (MAZDA MOTOR CORP), 22. März 1994 (1994-03-22)

## Beschreibung

Die Erfindung betrifft eine Ablage gemäß dem Oberbegriff des Patentanspruchs 1.

Seit langem ist man in der Kraftfahrzeugtechnik bestrebt, bei einem Frontalcrash mit Vorwärtsverlagerung eines Fahrzeuginsassen auf dem Fahrer- bzw. Beifahrersitz gefährliche Berührungen seiner Knie mit insbesondere scharfkantigen Aufbauteilen des Fahrzeugs zu verhindern. Diesem Zweck dienen sogenannte Kneebars, die weitgehend ebene Aufprallflächen für die Knie bilden und zur Umsetzung von kinetischer Energie in Verformungsarbeit ausgelegt sind. So beschreibt die DE 40 03 952 A1 einen derartigen Kniefänger, der im Bereich seiner unteren Kante schwenkbar gelagert und im Bereich seiner oberen Kante an der Karosserie über Deformationselemente abgestützt ist. Bei einem crashbedingten Aufprall der Knie des Fahrzeuginsassen erfolgt also eine Schwenkung des Kniefängers um seine untere Kante unter bleibender Deformation der Deformationselemente.

Die DE 42 43 791 A1 lehrt die Heranziehung eines Bestandteils eines Handschuhkastens als Kniefänger, wobei wiederum das bereits beschriebene Grundprinzip - schwenkbare Anlenkung im Bereich der Unterkante, Abstützung über Deformationselemente im Bereich der Oberkante - Anwendung findet.

Dem beschriebenen Stand der Technik ist gemeinsam, daß die Kniefänger zwar in Längsschnitten durch das Fahrzeug gebogen sind, jedoch gleichsam sprungfrei in die Kontur der darüberliegenden Schalttafel übergehen.

Besondere Umstände liegen nun vor, wenn das Fahrzeug mit einer unterhalb der Schalttafel befindlichen Ablage mit einem Boden versehen ist, der zur Gewinnung eines Zugriffs zu der Ablage normalerweise einen senkrechten Abstand zu der darüber befindlichen Schalttafel wahrt. Die entsprechende eine Kante dieses Bodens wirkt dabei zusammen mit dem Boden in seiner Gesamtheit für die im Crashfalle vorschnellenden Knie eines Fahrzeuginsassen wie eine Schneide, so daß gefährliche Verletzungen entstehen können. Das Vorsehen einer zusätzlichen, lediglich als Insassenschutz für die Knie dienenden Abdeckung ist aus Platzgründen sowie im Hinblick auf die erforderliche Zugänglichkeit der Ablage nicht möglich.

Der Erfindung liegt die Aufgabe zugrunde, eine gattungsgemäße Ablage mit einem definierten Boden zu schaffen, die trotz der für eine derartige Ablage erforderlichen Verhältnisse im Bereich des dem Fahrzeugsitz und damit den Knien des Fahrzeuginsassen zugekehrten Kante des Bodens bei einem Crash insassenfreundlich gestaltet ist.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Wesentlich für die Erfindung ist also die Tatsache, daß beim Auftreten eines Frontalcrashs der Boden um eine im Bereich seiner dem Fahrzeuginsassen abgekehrten Kante verlaufende Schwenkachse entweder aktiv (durch zusätzliche, im Crashfalle aktivierte Einrichtungen) oder passiv (durch das Auftreffen der Knie des Fahrzeuginsassen) derart geschwenkt wird, daß seine dem Fahrzeugsitz zugekehrte eine Kante zur Anlage an der Schalttafel gelangt, also der "Schneidencharakter" des Bodens für die Knie vermieden ist, dagegen der Boden nunmehr einen Bestandteil einer Kniesicherheitseinrichtung bildet.

Wie bereits aus dieser ersten Beschreibung der Erfindung hervorgeht, gibt es unterschiedliche Ausführungsformen der Erfindung, woraus der Vorteil resultiert, daß die Erfindung auf einfache Weise an unterschiedliche Verhältnisse anpaßbar ist. Mehrere derartige Ausführungsformen werden im folgenden anhand der Zeichnung erläutert, deren Figuren sämtlich schematisch Längsschnitte durch den Schalttafelbereich eines Kraftfahrzeugs wiedergeben.

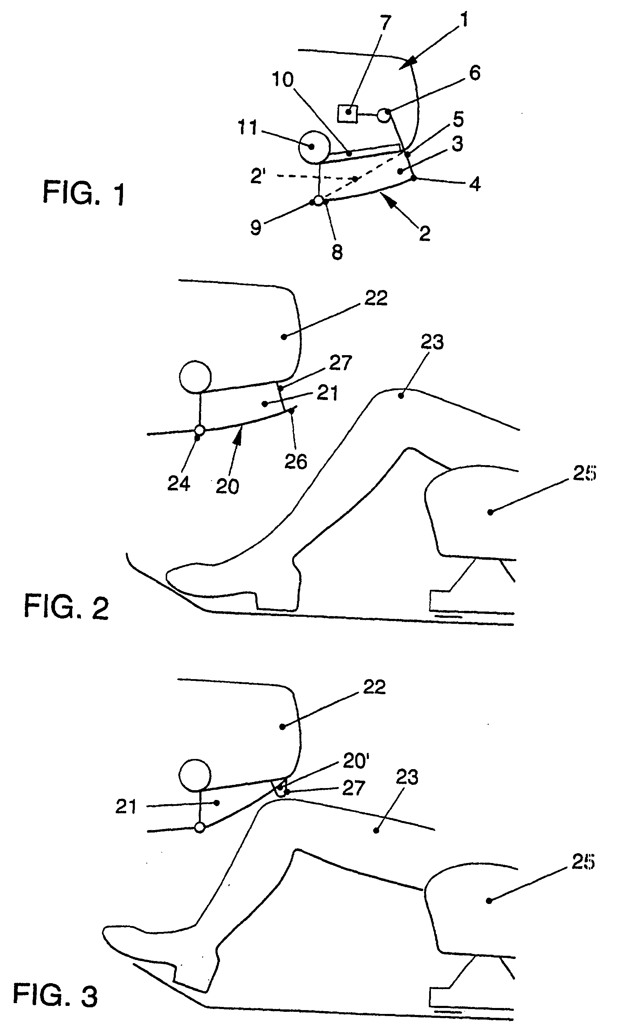

Betrachtet man zunächst Figur 1, so ist bei 1 eine Schalttafel üblichen und daher nicht zu beschreibenden Aufbaues angedeutet. Der Boden 2 des Ablagefachs 3 unterhalb der Schalttafel 1 ist in Längsrichtung des Fahrzeugs gekrümmt, so daß er etwa wannenförmig gestaltet ist und die Ablage verschiedener, auch kleinerer Gegenstände ermöglicht. Im Bereich der dem hier nicht dargestellten Fahrzeugsitz zugekehrten einen Querkante 4 des Bodens 2 erkennt man die band- oder seilartige Zugaufhängung 5, in deren Verlauf ein Zugkrafterzeuger nach Art eines Sicherheitsgurtstraffers 6 angeordnet ist. Derartige Gurtstraffer sorgen bekanntlich beim Auftreten eines Crashs, der durch den Crashsensor 7 erfaßt wird, für die Erzeugung einer Zugkraft in der Zug aufhängung 5, so daß dann der Boden 2 um die im Bereich seiner anderen Querkante 8 vorgesehene querverlaufende Schwenkachse 9 in seine Crashposition 2' verschwenkt wird. In dieser legt er sich mit seiner einen Kante 4 an die Schalttafel 1, die bei 10 Verstärkungen zur Abstützung aufweist, die die von den Knien des Fahrzeuginsassen im Crashfalle auf den Boden 2 ausgeübten Druckkräfte in den Querträger 11 des Fahrzeugaufbaues leiten.

In diesem Ausführungsbeispiel ist der Boden 2 deformierbar ausgebildet; zu diesem Zweck kann er auf einer steifen Grundplatte deformierbare, dem Fahrzeuginsassen zugekehrte Glieder aufweisen; der Boden 2 selbst kann aber auch deformierbar gestaltet sein.

Während in dem beschriebenen Ausführungsbeispiel nach Figur 1 aktive Elemente 6, 7 zum Verschwenken des Bodens 2 in seine Crashposition 2', in der er also zumindest einen Bestandteil einer Kniesicherheitsvorrichtung bildet, vorgesehen sind, wird nun anhand der Figuren 2 und 3 eine Lösung der Erfindung beschrieben, die gleichsam passiv arbeitet, bei der nämlich der dort mit 20 bezeichnete Boden der Aufnahme 21 unterhalb der Schalttafel 22 durch die Knie 23 des Fahrzeuginsassen im Crashfalle um die horizontal und querverlaufende Schwenkachse 24 in seine in Figur 3 dargestellte Crashposition 20' verschwenkt wird. Hier ist übrigens bei 25 der Fahrzeugsitz angedeutet. Während also im normalen Fahrbetrieb gemäß Figur 2 der Boden 20 durch Wahrung eines senkrechten Abstands im Bereich seiner einen Kante 26, definiert durch die Aufhängung 27, einen Zugriff zur Ablage 21 sicherstellt, bringt das Vorschnellen der Knie 23 des Fahrzeuginsassen beim Auftreten eines Frontalcrashs den Boden 20 in seine Crash- oder Sicherheitsposition 20'.

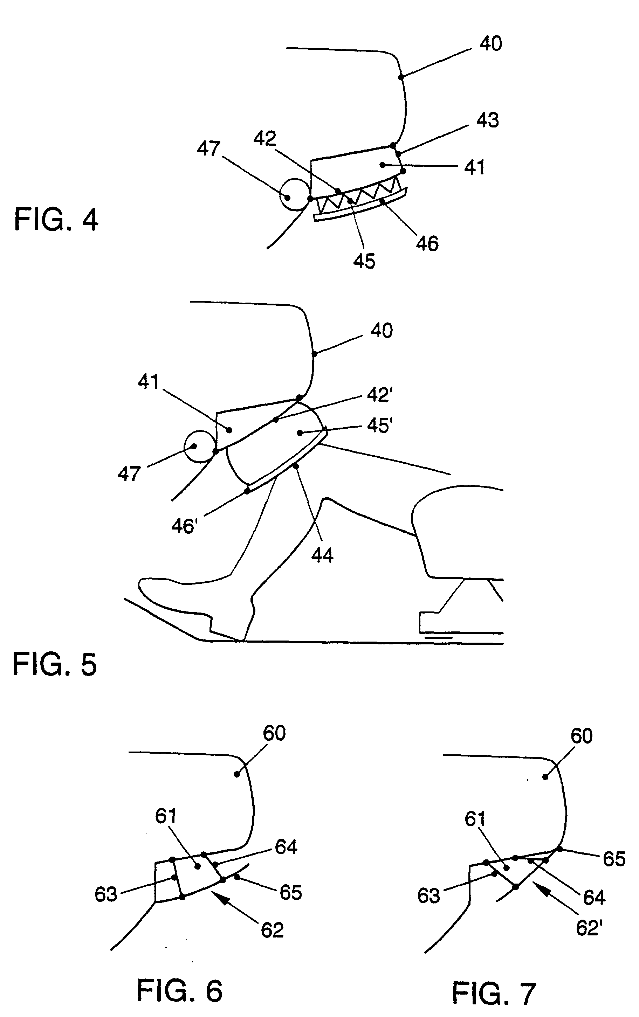

In dem Ausführungsbeispiel nach den Figuren 4 und 5 wird nunmehr in besonders eleganter Weise der beim Aktivieren eines Sicherheitselements in Gestalt eines Airbags auftretende Rückstoß zur Erzeugung der mehrfach definierten Schwenkbewegung des Bodens ausgenutzt. Die Armaturentafel ist hier mit 40 bezeichnet, unter ihr befindet sich wieder die Aufnahme 41, die nach unten durch den wannenartigen Boden 42 begrenzt ist. Auch hier wird er durch Aufhängungen 43 im normalen Fahrbetrieb so gehalten, daß ein Zugriff zu der Ablage 41 leicht möglich ist. In diesem Ausführungsbeispiel trägt der Boden 42 auf seiner dem Sitz und damit dem Fahrzeuginsassen (Figur 5: Knie 44) zugekehrten Fläche den Airbag 45, der auf seiner freien Außenseite mit der Aufprallplatte 46 für die Knie 44 versehen ist. Fahrzeugfest ist der Gasgenerator 47 für den Airbag 45 angeordnet.

Beim Auftreten eines Frontalcrashs, der wiederum in an sich bekannter und daher hier nicht gezeigter Weise von einem Crashsensor oder einem Annäherungssensor gemeldet wird, erfolgt das Aufblasen des Airbags, dessen aufgeblasene Form bei 45' in Figur 5 angedeutet ist. Damit kommt die Prallplatte 46 in ihrer Position 46' zur Auflage auf den Knien 44 des dahintersitzenden Fahrzeuginsassen, wird dort gleichsam nach vorn abgestützt, so daß durch das Aufblasen des Airbags der Boden um seine untere Kante in die in Figur 5 bei 42' abgedeutete Crash- oder Sicherheitslage geschwenkt wird, in der er sich also mit seiner einen Kante an der Schalttafel abstützt. In diesem Ausführungsbeispiel bildet der Boden 42 also einen tragenden und stützenden Bestandteil der Kniesicherheitseinrichtung, während er im Ausführungsbeispiel nach den Figuren 2 und 3 die Sicherheitseinrichtung selber bildet.

Es war gesagt, daß der Boden im Bereich seiner dem Fahrzeugsitz abgekehrten Kante um eine querverlaufende Schwenkachse schwenkbar sein soll. Dies soll nicht nur so verstanden sein, daß die Schwenkachse unmittelbar am Boden angreift, vielmehr können hier auch Schwenkarme vorgesehen sein, die zusammengesetzte Schwenkbewegungen zulassend bemessen sind. Betrachtet man die Figuren 6 und 7, die die Verhältnisse bei einer entsprechenden Ausführungsform der Erfindung für den Fall des normalen Fahrbetriebs (Figur 6) und den Crashfall (Figur 7) wiedergeben, so erkennt man, daß unterhalb der Schalttafel 60 zur Bildung der Ablage 61 der Boden 62 über Paare von Schwenkarmen 63, 64 aufgehängt ist, die so bemessen sind, daß durch bei einem Crash auftretende oder ausgelöste Kräfte der Boden sowohl in Richtung auf den benachbarten Fahrzeugsitz als auch mit seiner einen Kante 65 zur Anlage an der Schalttafel 60 veschwenkt wird. Diese Ausführung der Erfindung trägt der Tatsache Rechnung, daß ein einfaches Verschwenken des Bodens 62 um eine an seiner unteren Querkante angreifende Schwenkachse häufig durch in der Ablage 61 befindliche Gegenstände verhindert wird.

Mit der Erfindung ist demgemäß eine gattungsgemäße Ablage geschaffen, die nicht nur hinsichtlich der bei einem Crash durch sie verursachten Gefahren für einen hinter ihr sitzenden Fahrzeuginsassen entschärft, sondern zugleich zur Gewinnung einer Kniesicherungsvorrichtung herangezogen wird. Dabei läßt die Erfindung weitgehende Freiheit hinsichtlich der Ausgestaltung im einzelnen. So kann der Boden zur Gewinnung einer Ablage mit in Querrichtung des Fahrzeugs großer Erstreckung zwischen einer seitlichen Säule des Fahrzeugaufbaues (A-Säule) und einer Mittelkonsole verlaufen und dort auch schwenkbar gelagert sein. Sofern sich der Boden fahrerseitig auch unter der Lenksäule erstreckt, kann er mit Sollbruch- oder Sollreißstellen versehen sein, damit die beschriebene Aufwärtsschwenkung des Bodens im Crashfalle durch die Lenksäule nicht behindert wird. Es kann auch zweckmäßig sein, die der Ablage zugekehrten Wände der Schalttafel derart nachgiebig oder zerstörbar auszubilden, daß sie im Crashfall durch auf dem dann hochgehenden Boden befindliche Gegenstände deformiert werden, diese also die Bodenbewegung nicht behindern.

## Patentansprüche

1. Unter einer Kraftfahrzeug-Schalttafel (1) befindliche Ablage mit einem Boden (2) dessen einem Fahrzeugsitz (25) zugekehrte querverlaufende eine Kante (4) zur Bildung einer Zugriffsöffnung (3) der Ablage normalerweise in senkrechtem Abstand von der Schalttafel (1) verläuft, **dadurch gekennzeichnet, daß** der Boden (2) im Bereich seiner querverlaufenden anderen Kante (8) bis zur Anlage der einen Kante (4) an der Schalttafel (1) bei einem Frontalcrash hochschwenkbar gelagert (9) ist und in der hochgeschwenleten Position (2') einen Bestandteil einer Knie-Sicherheitseinrichtung für einen Fahrzeuginsassen auf dem Fahrzeugsitz bildet.

2. Ablage nach Anspruch 1, **dadurch gekennzeichnet, daß** der Boden (2) in sich bei crashbedingter Abstützung der Knie plastisch deformierbar ist.

3. Ablage nach Anspruch 1 oder 2, **dadurch gekennzeichnet, daß** der Boden (42) auf seiner dem Fahrzeugsitz zugekehrten Fläche einen Airbag (45) trägt, der auf seiner dem Boden (42) abgekehrten Seite mit einer Prallplatte (46) als Knieabstützung versehen ist, so daß die Hochschwenkbewegung des Bodens (42) durch den Rückstoß beim Aufblasen des Airbags (45) erfolgt.

4. Ablage nach Anspruch 1 oder 2, **dadurch gekennzeichnet, daß** am Boden (2) eine Zug aufhängung (5) angreift, der fahrzeugfest ein über einen Crashsensor (7) betätigbarer Zugkrafterzeuger (6) nach Art eines Sicherheitsgurtstraffers zugeordnet ist.

5. Ablage nach Anspruch 1, 2 oder 4, **dadurch gekennzeichnet, daß** am Boden (62) Schwenkarmpaare (63, 64) zur Erzeugung crashbedingter Bewegungen des gesamten Bodens (62) in Richtung auf den Fahrzeugsitz und der einen Kante (65) des Bodens (62) nach oben zur Anlage an der Schalttafel (60) angreifen.

6. Ablage nach einem der Ansprüche 1 bis 5, **dadurch gekennzeichnet, daß** der Boden zwischen einer seitlichen Säule des Fahrzeugaufbaues und einer Mittelkonsole verläuft.

7. Ablage nach einem der Ansprüche 1 bis 6, **dadurch gekennzeichnet, daß** bei einem unterhalb einer Lenksäule verlaufenden Boden dieser mit Sollbruchstellen zur Vermeidung einer Behinderung seiner Hochschwenkbewegung durch die Lenksäule versehen ist.

## Claims

1. Oddments tray located below a motor-vehicle dashboard (1), having a base (2), one edge (4) of which, which faces a vehicle seat (25) and runs transversely, normally runs at a vertical distance from the dashboard (1) in order to form an access opening (3) to the oddments tray, **characterized in that** the base (2) is mounted (9) in the region of its transversely running, other edge (8) in a manner such that it can be pivoted upwards in a head-on crash until the one edge (4) bears against the dashboard (1) and, in the pivoted-up position (2'), forms part of a knee safety device for a vehicle occupant on the vehicle seat.

2. Oddments tray according to Claim 1, **characterized in that** the base (2) can be intrinsically plastically deformed in the case of a crash-induced support of the knees.

3. Oddments tray according to Claim 1 or 2, **characterized in that** the base (42) bears, on its side facing the vehicle seat, an airbag (45) which is provided, on its side facing away from the base (42), with an impact plate (46) as a knee support, with the result that the pivoting-up movement of the base (42) takes place by means of the recoil during inflation of the airbag (45).

4. Oddments tray according to Claim 1 or 2, **characterized in that** a tensioning suspension means (5) engages on the base (2) and is assigned, secured on the vehicle, a tensioning-force generator (6), which can be actuated via a crash sensor (7), in the manner of a seat belt tightener.

5. Oddments tray according to Claim 1, 2 or 4, **characterized in that** pairs of pivoting arms (63, 64) engage on the base (62) in order to produce crash-induced movements of the entire base (62) in the direction of the vehicle seat and of the one edge (65) of the base (62) upwards for bearing against the dashboard (60).

6. Oddments tray according to one of Claims 1 to 5, **characterized in that** the base runs between a lateral pillar of the vehicle body and a central console.

7. Oddments tray according to one of Claims 1 to 6, **characterized in that**, in the case of a base running below a steering column, the said base is provided with predetermined breaking points in order to avoid its pivoting-up movement being obstructed by the steering column.

## Revendications

1. Compartiment de rangement avec un fond (2), placé sous un tableau de bord (1) d'un véhicule, dont une arête (4) s'étendant transversalement, tournée vers un siège du véhicule (25), s'étend normalement à une distance perpendiculaire par rapport au tableau de bord (1) pour former une ouverture d'accès (3) du compartiment de rangement, **caractérisé en ce que** le fond (2) est monté (9) de manière à pouvoir pivoter vers le haut dans la région de son autre arête (8) s'étendant transversalement jusqu'à ce que la première arête (4) vienne buter contre le tableau de bord (1) dans le cas d'une collision frontale, et, dans la position pivotée vers le haut (2'), fait partie d'un dispositif de protection des genoux pour un occupant du véhicule sur le siège du véhicule.

2. Compartiment de rangement selon la revendication 1, **caractérisé en ce que** le fond (2) peut se déformer plastiquement dans le cas d'une pression des genoux provoquée par une collision.

3. Compartiment de rangement selon la revendication 1 ou 2, **caractérisé en ce que** le fond (42) porte sur sa face tournée vers le siège du véhicule un airbag (45) qui est pourvu, sur son côté opposé au fond (42), d'une plaque d'impact (46) servant d'appui pour les genoux, de sorte que le mouvement de pivotement vers le haut du fond (42) s'effectue par le recul lors du gonflage de l'airbag (45).

4. Compartiment de rangement selon la revendication 1 ou 2, **caractérisé en ce qu'**une attache de traction (5) vient en prise avec le fond (2), un générateur de force de traction (6) actionnable par le biais d'un détecteur de collision (7) lui étant associé de manière fixée au véhicule à la façon d'un rétracteur de ceinture de sécurité.

5. Compartiment de rangement selon la revendication 1, 2 ou 4, **caractérisé en ce que** des paires de bras pivotants (63, 64) pour générer des mouvements provoqués par une collision de l'ensemble du fond (62) dans la direction du siège du véhicule et de l'une des arêtes (65) du fond (62) vers le haut jusqu'à venir en butée contre le tableau de bord (60) viennent en prise avec le fond (62).

6. Compartiment de rangement selon l'une quelconque des revendications 1 à 5, **caractérisé en ce que** le fond s'étend entre une colonne latérale de la carrosserie du véhicule et une console centrale.

7. Compartiment de rangement selon l'une quelconque des revendications 1 à 6, **caractérisé en ce que** dans le cas d'un fond s'étendant en dessous d'une colonne de direction, celui-ci est pourvu de points de fracture pour éviter que son mouvement de pivotement vers le haut ne soit gêné par la colonne de direction.
